# FASCICULE DE BREVET EUROPEEN

(11) **EP 0 393 570 B1**
(45) Date de publication et mention de la délivrance du brevet: **14.12.1994**
(21) Numéro de dépôt: 90107233.0
(22) Date de dépôt: 17.04.1990
(51) Int. Cl.: H04M 11/08, H04M 1/64

(54) **Terminal videotex répondeur**
Bildschirmtextantwortendgerät
Videotex answering terminal

(30) Priorité: 21.04.1989 FR 8905353
(43) Date de publication de la demande: 24.10.1990
(73) Titulaire: ALCATEL BUSINESS SYSTEMS, F-75008 Paris (FR)
(72) Inventeur: Bindels, Guy, F-67400 Illkirch (FR)
(74) Mandataire: Weinmiller, Jürgen

(56) Documents cités:
- EP-A- 0 127 517
- FR-A- 2 312 896
- FR-A- 2 564 222
- ELECTRONIQUE APPLICATIONS, no. 21, decembre/janvier 1981/1982, pages 119-121, Paris, FR; P. Gueulle: "Telecommande par voie telephonique"

## Description

La présente invention porte sur les terminaux vidéotex tels que ceux dits postes "minitel". Elle porte plus particulièrement sur un tel terminal raccordé au réseau téléphonique commuté et équipé en répondeur automatique.

De manière courante, l'établissement de la communication entre un poste minitel et un serveur de données, à travers le réseau téléphonique public, est assurée à l'aide d'un poste téléphonique d'abonné. Le poste téléphonique est raccordé, par le poste minitel, à un conjoncteur de raccordement au réseau téléphonique. Initialement, le poste téléphonique se trouve branché sur la ligne téléphonique d'abonné, tandis que le poste minitel lui-même n'est pas connecté au réseau. Un basculeur du poste minitel permet d'assurer cette fonction. Ce même basculeur commandé permet aussi la connexion du poste minitel à la ligne téléphonique, une fois la liaison établie.

La procédure d'accès au réseau téléphonique commuté pour l'établissement de la liaison avec le serveur a lieu par l'intermédiaire du poste téléphonique à l'état décroché. L'abonné compose le numéro du centre de données auquel appartient le serveur, ou le numéro du serveur. L'appel est acheminé par le réseau téléphonique, il est détecté au niveau d'un central de raccordement qui effectue la liaison avec le serveur. Une tonalité de réponse est émise en retour par le serveur vers l'abonné. La reconnaissance de cette tonalité par l'abonné vaut confirmation de la liaison établie avec le serveur. L'abonné bascule alors la ligne téléphonique sur son poste minitel, à l'aide de la touche "connexion" prévue à cet effet sur ce poste, pour la commande du basculeur précité et raccroche le combiné de son poste téléphonique.

Ce signal d'appel transmis sur la ligne téléphonique est de caractéristiques définies, pour sa détection. Il correspond à l'application d'une tension alternative à basse fréquence entre les fils de ligne du réseau, en général à une fréquence de 50 Hz, et à un niveau allant de 25V à 96V.

La tonalité de réponse est également définie, elle est à la fréquence de 2100 Hz.

Le poste minitel et le serveur étant reliés à travers le réseau, les échanges de données entre le poste minitel et le serveur peuveut dès lors avoir lieu à travers la liaison établie.

Pour cette procédure d'échanges de données entre le poste minitel et le serveur, le poste minitel comporte un modem relié à travers un duplexeur à une voie commune d'émission/réception de données, et une unité de traitement organisée autour d'un microprocesseur relié au modem. Il comporte, en outre, un transformateur d'isolation galvanique couplant la voie commune d'émission/réception aux deux fils de ligne téléphonique. Un générateur de courant, monté entre les bornes de l'enroulement du transformateur relié aux fils de ligne, assure le maintien d'un courant continu sur la ligne téléphonique, dès que la liaison téléphonique a été établie et pendant la durée de cette liaison, pour la détection de l'état occupé de la ligne téléphonique d'abonné par le central.

L'unité de traitement est organisée autour du microprocesseur couplé par ailleurs au clavier de rentrée de données du poste minitel et à son écran d'affichage et éventuellement une imprimante. Le modem est affecté à la transformation des données numériques correspondant aux données rentrées par le clavier et aux données affichées sur l'écran en signaux de données analogiques transmis dans un sens ou l'autre sur la ligne téléphonique. Le duplexeur assure la transmission de ces signaux en séparant la voie commune d'émission/réception couplée à la ligne en deux voies individuelles d'émission et de réception reliées au modem.

La transmission bidirectionnelle des signaux sur la ligne téléphonique est assurée en affectant deux bandes de fréquence pour l'un et l'autre des sens de transmission des signaux. Ces deux bandes de fréquence sont centrées sur la fréquence de 420 Hz pour les signaux transmis du poste minitel vers le serveur et sur la fréquence de 1700 Hz pour ceux transmis du serveur au poste minitel. La transmission est faite à vitesse faible du poste minitel vers le serveur, de 75 bauds, et à vitesse plus élevée du serveur au minitel, de 1200 bauds, et dans un sens et l'autre à faible niveau, de 1 volt crête maximum.

Le transformateur assurant l'isolation entre le poste minitel et le réseau téléphonique est adapté aux caractéristiques de la ligne téléphonique pour la transmission de ces signaux de données, pour présenter avec le générateur de courant ou avec la voie émission du duplexeur une impédance adaptée à celle fixée de la ligne téléphonique, de 600 Ohms en général.

Une adaptation d'un tel poste minitel dit traditionnel, en poste minitel répondeur, exige d'associer aux circuits affectés aux signaux de données avec le transformateur d'isolation galvanique entre eux et le réseau, des circuits affectés aux signaux d'appel à détecter, avec leur propre isolation galvanique entre ces derniers circuits et le réseau.

Par rapport à un poste minitel traditionnel, un tel poste minitel équipé en répondeur est de coût augmenté de celui de la réalisation de la fonction de détection de signaux d'appel incluant l'isolation galvanique nécessaire, qui est propre à cette fonction.

La présente invention a pour but de réaliser un poste vidéotex répondeur à fonction de détection d'appel de coût minimisé, qui est incorporée dans ce poste.

La présente invention a pour objet un terminal vidéotex répondeur relié au réseau téléphonique commuté et présentant une première paire de fils affectée à la transmission de signaux d'appel, une deuxième paire de fils affectée à la transmission de données et un basculeur commandé couplant initialement la première paire de fils au réseau et couplant la deuxième paire de fils au réseau une fois une liaison téléphonique établie, ledit terminal comportant des moyens de détection de signal d'appel, des moyens de transmission de signal de données reliés à travers un modem à une unité de traitement, des moyens d'isolation galvanique entre les moyens de transmission de données et le réseau pour le signal de données, caractérisé en ce que lesdits moyens de détection d'appel comportent un amplificateur opérationnel dont la sortie est reliée à des moyens de reconnaissance du signal d'appel détecté et l'entrée de signal est couplée à ladite première paire de fils à travers lesdits moyens d'isolation galvanique pour le signal de données et une capacité compatible avec la fréquence du signal d'appel et une résistance d'atténuation du niveau dudit signal d'appel, associées auxdits moyens d'isolation galvanique pour un mode initial de fonctionnement du terminal en répondeur d'appel, et en ce qu'il comporte en outre des premiers moyens pour shunter ladite résistance d'atténuation et des seconds moyens d'adaptation d'impédance pour abaisser l'impédance de ladite capacité, commandés avec ledit basculeur lors de la reconnaissance du signal d'appel, pour le mode de fonctionnement du terminal en transmission de données.

Selon une autre caractéristique de l'invention, ledit amplificateur opérationnel de détection présente un seuil haut et un seuil bas sur son entrée de référence pour le basculement de son état de sortie, adaptés à l'élaboration du signal détecté sous forme de créneaux de fréquence égale à celle dudit signal d'appel et de durée définie au moins de quelques millisecondes.

Selon une autre caractéristique de l'invention, lesdits seconds moyens d'adaptation d'impédance sont constitués par un générateur de courant, destiné à absorber un courant sur la ligne téléphonique une fois la liaison établie et auquel est donnée une impédance finie limitée, sensiblement de 1800 Ω.

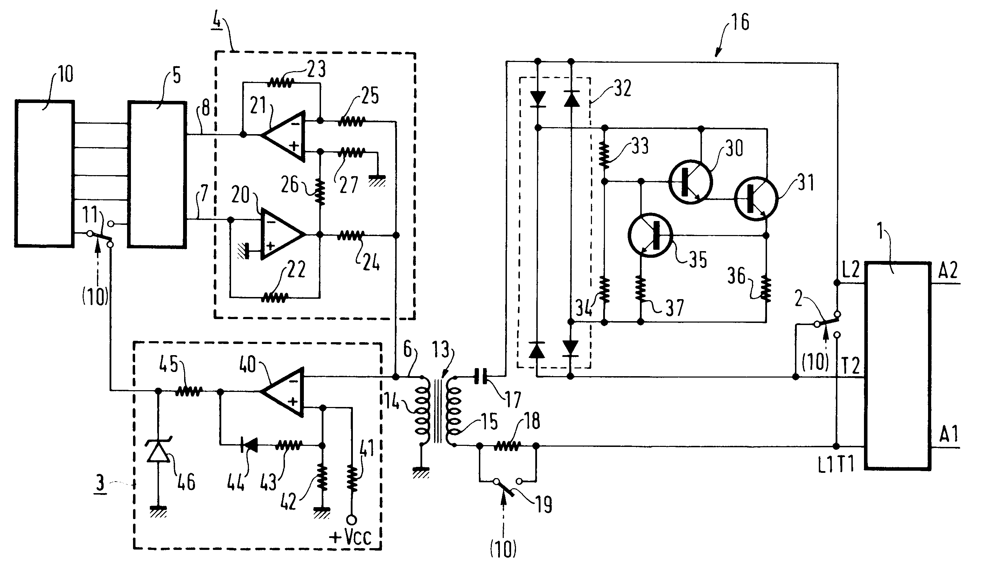

Les caractéristiques et les avantages de la présente invention ressortiront plus clairement de la description faite ci-après d'un exemple de réalisation donné dans le dessin ci-annexé.

Dans ce dessin, la figure unique illustre les circuits d'un poste minitel répondeur selon la présente invention.

Le poste minitel répondeur selon la présente invention est raccordé à deux lignes A1 A2 du réseau téléphonique commuté par un conjoncteur 1 d'où partent pour le poste minitel répondeur trois fils notés L1 T1 pour l'un, T2 pour l'autre et L2 pour le troisième. Deux de ces fils, T1 et T2, correspondent à la paire de fils raccordés à un poste téléphonique d'abonné, non représenté, pour l'envoi en ligne de signaux de numérotation. Les deux autres fils L1 et L2 correspondent aux fils raccordés aux circuits d'un poste minitel traditionnel pour la transmission bidirectionnelle de signaux de données sur la ligne téléphonique A1 A2, une fois la liaison demandée précédemment établie.

Dans le poste minitel, un commutateur 2 relié au fil T2 connecte ce fil T2 au fil L2 ou le fil T2 au fil L1 T1. Il correspond au basculeur d'un poste minitel traditionnel, qui au repos assure le raccordement du poste téléphonique au réseau, via le fil L2 relié au fil T2, et qui est actionné manuellement à partir de la touche "connexion" du poste traditionnel, une fois la liaison établie. Ce commutateur 2 est montré dans sa position de repos dans laquelle il permet l'envoi d'un signal de numérotation par le poste téléphonique d'abonné et dans laquelle il permet aussi dans le poste minitel répondeur selon la présente invention une détection d'appel. Dans son autre position, pour laquelle il relie le fil T2 au fil L1 T1, il est dit en position de travail, pour la transmission de données.

Le poste minitel répondeur comporte, d'une part, un détecteur de signal d'appel 3 et, d'autre part, un duplexeur 4 et un modem 5 pour les signaux de données. Le duplexeur 4 assure la transmission du signal de données dans un sens et dans l'autre, entre une voie commune d'émission réception 6 et deux voies individuelles d'émission 7 et de réception 8. Ces deux voies individuelles 7 et 8 sont reliées au modem 5. Une unité de traitement, organisée autour d'un microprocesseur 10, seul représenté, est reliée d'une part au modem pour le traitement des signaux de données à émettre ou reçus, et d'autre part, à travers un commutateur commandé 11 au détecteur 3 de signaux d'appel, pour leur reconnaissance. Ce microprocesseur 10 est par ailleurs couplé à un clavier et à un écran ainsi qu'une imprimante non représentés, pour la rentrée par le clavier de données à émettre et pour l'affichage sur l'écran de données reçues et à émettre par le poste minitel et leur impression si souhaité.

Dans le poste minitel répondeur, un transformateur d'isolation galvanique 13, adapté à la transmission bidirectionnelle des signaux de données sur la ligne téléphonique, à travers le commutateur 2 en position de travail, couple la voie commune d'émission/réception 6 pour le duplexeur 4 aux fils L1 L2. Ce transformateur a un premier enroulement 14 qui est relié à la masse et définit, sur son autre borne, la voie commune d'émission/réception 6. Son deuxième enrou lement 15 est couplé aux fils L1 L2.

Un générateur de courant 16 monté en parallèle entre les fils L1 L2, sur les bornes de l'enroulement 15 de ce transformateur 13, permet au central téléphonique de détecter l'état occupé de la ligne téléphonique.

Le transformateur 13 est utilisé également pour réaliser le couplage entre le détecteur de signal d'appel 3 et la ligne téléphonique A1 A2, ou les fils T1 T2 avec le commutateur 2 alors en position de repos. A cet effet, pour tenir compte des caractéristiques du signal d'appel de fréquence en général de 50 Hz et de niveau minimal de 25V, l'enroulement 15 de ce tranformateur est connecté entre les fils T1 T2, avec le commutateur 2 au repos, à travers une capacité 17 et une résistance 18.

Cette capacité 17 est de valeur de 1 µF sensiblement, choisie en regard de la fréquence du signal d'appel reçu de la ligne téléphonique et à détecter par le détecteur 3 du poste minitel répondeur. La résistance 18 est elle même de valeur choisie, du 33 kΩ sensiblement, pour l'atténuation convenable du niveau du signal d'appel transmis par le transformateur.

Dans ce poste minitel répondeur, à transformateur d'isolation 13 utilisé en commun pour les signaux de données et les signaux d'appel, un commutateur 19 commandé est monté entre les bornes de la résistance 18. Ce commutateur 19 est commandé en fermeture avec la mise en position de travail du commutateur 2, pour shunter la résistance 18 et donc court-circuiter l'atténuation qu'elle entraîne, quand le poste est en transmission de données.

Les trois commutateurs 2, 11 et 19 de ce poste sont commandés automatiquement par le microprocesseur 10, ainsi qu'illustré par la flèche de commande qui leur est associée avec la référence entre parenthèses du microprocesseur. A la position de repos du commutateur 2, correspondent une position de repos du commutateur 11, pour laquelle le détecteur de seuil 3 est relié au microprocesseur 10 qui peut assurer la reconnaissance du signal d'appel du poste, et une position de repos du commutateur 19, pour laquelle ce commutateur 19 est ouvert et ne shunte pas la résistance 18. Dans le terminal, le commutateur 11 peut être supprimé, le microprocesseur 10 étant alors relié par deux liaisons indépendantes au modem 5 et au détecteur 3.

De manière comparable au montage associé à la résistance 18, le poste minitel répondeur est équipé de moyens abaissant l'impédance de la capacité 17 lorsque le poste est en transmission de données. Ces moyens peuvent être constitués par une capacité supplémentaire montée avec un commutateur commandé associé, qui ne sont pas représentés, en parallèle sur la capacité 17. Ces moyens sont cependant de préférence constitués directement ainsi que représentés par le générateur de courant 16, présentant une impédance choisie, non infinie, pour adapter l'impédance présentée par le transformateur à celle fixée de la ligne téléphonique, de valeur entre 400 et 900Ω.

Les circuits du poste minitel répondeur sont décrits ci-après.

Dans ce poste, le modem 5 et le microprocesseur 10 sont des circuits connus, le microprocesseur 10 étant en outre prévu pour assurer une reconnaissance de la fréquence du signal d'appel détecté qu'il reçoit du détecteur 3 à travers le commutateur 11 fermé.

Le duplexeur 4 est également un circuit en tant que tel connu. Il comporte un amplificateur opérationnel d'émission 20 et un amplificateur opérationnel de réception 21 des signaux de données entre les voies 7 et 8 et la voie 6, c'est-à-dire entre le modem 5 et le transformateur 13.

Ces amplificateurs ont chacun une résistance de contre réaction 22 ou 23 selon le cas, entre leur entrée négative et leur sortie. La sortie de l'amplificateur d'émission 20 est reliée à la voie commune d'émission/réception 6 à travers une résistance 24, l'entrée négative de l'amplificateur de réception 21 est reliée à cette même voie 6 à travers une résistance 25. La sortie de l'amplificateur d'émission est en outre couplée à l'entrée positive de l'amplificateur de réception à travers une résistance 26, cette entrée positive étant par ailleurs reliée à travers une résistance 27 à la masse, pour permettre d'élaborer le signal de données de réception à partir du signal émission/réception présent sur la voie 6 et du signal d'émission issu de l'amplificateur 20.

Le générateur de courant 16 comporte un montage Darlington à deux transistors 30 et 31, commandé à travers un pont redresseur de diodes 32 référencé globalement et un pont résistif, à résistances 33 et 34. Le transistor de sortie 31 de ce montage Darlington a son collecteur relié avec celui du transistor 30 à l'une des bornes du pont de diodes, à laquelle est reliée la résistance 33, il a son émetteur qui est relié à travers une résistance 36 à l'autre borne opposée du pont de diodes, à laquelle est reliée l'autre résistance 34, et qui commande le transistor 35. Les deux autres bornes du pont redresseur à diodes sont reliées aux fils L2 et L1, à travers le commutateur 2 en position de travail, pour ce dernier fil L1.

Le transistor 35 a son collecteur relié, avec la base du transistor 30, à travers la résistance 33 à l'une des bornes du pont de diodes, son émetteur est relié à travers une résistance 37 à l'autre borne du pont de diodes.

Dans ce générateur de courant, les résistances 33 et 34 sont égales et très supérieures à la résistance 37, ainsi qu'à la résistance 36. En choisissant ces résistances à des valeurs convenables, par exemple R33 = 10 kΩ, R37 = 143Ω et R36 = 25,5Ω, on donne au générateur de courant 16 une impédance finie Z de l'ordre de 1800Ω.

Ce générateur de courant 16 qui, de manière connue une fois la liaison établie, absorbe un courant maintenu sur la ligne téléphonique, pour la reconnaissance par le central de l'état occupé de la liaison, permet en outre d'abaisser l'impédance que présente la capacité 17 lors de la transmission de données.

Le détecteur d'appel 3 comporte un amplificateur opérationnel 40. Son entrée négative est reliée à la voie d'émission/réception 6 définie sur la borne de l'enroulement 14 du transformateur 13, non mise à la masse. Son entrée positive est reliée d'une part à un pont résistif ayant une résistance 41 reliée à une source +Vcc, à 5V, et une résistance 42 reliée à la masse et d'autre part à sa sortie à travers une résistance 43 et une diode 44. La sortie de cet amplificateur 40 est par ailleurs reliée à travers une résistance 45 et le commutateur 11 au repos au microprocesseur 10. Une diode Zener 46 montée entre la sortie de la résistance 45 et la masse limite le niveau du signal de sortie du détecteur 3 à une valeur compatible TTL.

Dans ce détecteur de signaux d'appel 3, la branche de contre réaction à diode 44 et résistance 43 est rendue bloquée par le niveau haut de sortie de l'amplificateur opérationnel 40 et passante par le niveau bas de sa sortie. Il en résulte sur cette entrée positive, une valeur de seuil haut qui fait basculer du niveau haut au niveau bas le signal de sortie de cet amplificateur et une valeur de seuil bas provoquant le basculement inverse du niveau de sortie de cet amplificateur 40. Cette valeur de seuil haut est définie par les résistances 41 et 42 et est choisie pour correspondre à la partie sensiblement linéaire et croissante de l'alternance positive du signal d'appel présent sur la voie 6. La valeur de seuil bas est quant à elle définie par les résistances 41, 42 et 43, elle est choisie proche de 0 volt.

Ces valeurs de seuil haut et de seuil bas permettent l'obtention sur la sortie de l'amplificateur opérationnel 40 d'un signal dont les créneaux à la fréquence du signal d'appel sont de durée supérieure à 4ms pour leur traitement de reconnaissance de la fréquence d'appel par le microprocesseur 10.

On donne avantageusement aux résistances 41, 42 et 43 les valeurs suivantes :
R41 = 100 kΩ, R42 = 5,1 kΩ et R43 = 150 kΩ.

Pour une tension VCC = +5V, le niveau de seuil haut est alors Vs+ = 240 mV.

Le poste minitel répondeur étant initalement en récepteur de signaux d'appel par les commutateurs 2, 19 et 11 en position de repos, le générateur de courant 16 est court-circuité, les fils L2 et T2 étant reliés par le commutateur 2. Des signaux d'appel présents sur les fils T1 et T2 sont fortement atténués par la résistance 18 et transmis à travers la capacité 17 et le transformateur 13 à la voie 6. Par le niveau de la masse ramené sur la résistance 24, par l'amplificateur d'émission 20 à l'état de repos du duplexeur 4, cette résistance 24 se trouve en parallèle sur l'enroulement 14 du transformateur 13 et constitue la résistance de charge sur l'enroulement 14 pour ces signaux d'appel. Cette résistance 24 est de valeur choisie, sensiblement égale à 1 kΩ. Sa valeur intervient avec l'impédance globale du transformateur 13, du condensateur 17 et de la résistance 18 dans l'impédance résultante du montage.

Le signal présent sur la voie 6 est ainsi détecté par l'amplificateur opérationnel 40. Le signal de sortie de l'amplificateur opérationnel 40 ramené à un niveau compatible TTL par la diode Zener 46 est transmis au microprocesseur 10. La fréquence des créneaux du signal détecté définie par la fréquence du signal d'appel de la ligne, peut alors être reconnue directement par le microprocesseur 10.

La reconnaissance du signal d'appel du poste par son microprocesseur provoque la mise en position de travail des commutateurs 2, 19 et 11. Le détecteur d'appel 3 est de préférence isolé du microprocesseur 10 par le commutateur 11. Le microprocesseur 10 provoque alors à travers le modem 4, l'émission en ligne de la tonalité de réponse, à 2100 Hz, vers terminal appelant qui détectée par ce dernier permet à l'abonné d'assurer la connexion de son propre poste minitel sur le réseau téléphonique.

Le poste minitel répondeur appelé et le poste minitel appelant étant alors en liaison, l'échange de données s'effectue entre eux avec le poste minitel répondeur se comportant comme un serveur, c'est-à-dire émettant sur la bande de fréquence haute centrée sur 1700 Hz et recevant des signaux de données du poste appelant dans la bande de fréquence basse centrée sur 420 Hz.

Le signal de données émis par le poste minitel peut consister initialement en une page d'accueil pour le terminal appelant. Une telle page d'accueil est initialement mémorisée dans des mémoires associées au microprocesseur 10 dans l'unité de traitement. Cette page d'accueil invite le poste appelant à poursuivre la procédure d'échanges de données avec le poste répondeur appelé.

## Revendications

1. Terminal vidéotex répondeur relié au réseau téléphonique commuté et présentant une première paire de fils (L1 T1, T2) affectée à la transmission de signaux d'appel, une deuxième paire de fils (L1 T1, L2) affectée à la transmission de données et un basculeur commandé (2) couplant initialement la première paire de fils au réseau et couplant la deuxième paire de fils au réseau une fois une liaison téléphonique établie, ledit terminal comportant des moyens de détection de signal d'appel, des moyens de transmission de signal de données reliés à travers un modem à une unité de traitement, des moyens d'isolation galvanique entre les moyens de transmission de données et le réseau pour le signal de données, caractérisé en ce que lesdits moyens de détection d'appel (3) comportent un amplificateur opérationnel (40) dont la sortie estreliée à des moyens (10) de reconnaissance du signal d'appel détecté et l'une des entrées dite de signal est couplée à ladite première paire de fils (L1 T1, T2) à travers lesdits moyens d'isolation galvanique pour le signal de données et une capacité (17) compatible avec la fréquence du signal d'appel et une résistance d'atténuation (18) du niveau dudit signal d'appel, associées auxdits moyens d'isolation galvanique pour un mode initial de fonctionnement du terminal en répondeur d'appel, et en ce qu'il comporte en outre des premiers moyens (19) pour shunter ladite résistance d'atténuation et des seconds moyens d'adaptation d'impédance (16) pour abaisser l'impédance de ladite capacité, commandés avec ledit basculeur (2) lors de la reconnaissance du signal d'appel pour le mode de fonctionnement du terminal en transmission de données.

2. Terminal vidéotex répondeur selon la revendication 1, caractérisé en ce que lesdits moyens de reconnaissance du signal d'appel détecté sont constitués par un microprocesseur (10) relié à la sortie dudit amplificateur opérationnel (40) de détection, avec un limiteur de niveau (46) du signal d'appel détecté.

3. Terminal vidéotex répondeur selon la revendication 2, caractérisé en ce que ledit amplificateur opérationnel de détection (40) présente un seuil haut et un seuil bas sur son entrée de référence pour le basculement de son état de sortie, adaptés à l'élaboration du signal détecté sous forme de créneaux de fréquence égale à celle dudit signal d'appel et de durée définie au moins de quelques millisecondes.

4. Terminal vidéotex répondeur selon la revendication 3, caractérisé en ce que ledit amplificateur opérationnel présente sur son entrée de référence un pont résistif (41, 42) connecté entre une source de tension (Vcc) et la masse et une branche à résistance (43) et diode (44) la reliant à sa sortie, définissant lesdits seuil bas et seuil haut.

5. Terminal vidéotex répondeur selon l'une des revendications 1 à 4, et comportant un générateur de courant (16) absorbant un courant sur la ligne téléphonique, une fois la liaison téléphonique établie et pour la durée du mode de fonctionnement du terminal en transmission de données, caractérisé en ce que lesdits seconds moyens (16) d'adaptation d'impédance sont constitués par ledit générateur de courant (16) réalisé pour présenter une impédance finie limitée.

6. Terminal vidéotex répondeur selon la révendication 5, caractérisé en ce que ledit générateur de courant (16) est d'impédance choisie sensiblement égale à 1800 Ω.

## Patentansprüche

1. Bildschirmtext-Endgerät mit Antwortgeber, das an ein öffentliches Fernsprechnetz angeschlossen ist und ein erstes Drähtepaar (L1 T1, T2) für die Rufsignalübertragung, ein zweites Drähtepaar (L1 T1, L2) für die Datenübertragung und einen gesteuerten Kippschalter (2) aufweist, der anfänglich das erste Drähtepaar an das Netz anschließt und das zweite Drähtepaar an das Netz anschließt, sobald eine Fernsprechverbindung hergestellt ist, wobei das Endgerät Mittel zur Erfassung des Rufsignals, Mittel zur Übertragung eines Datensignals, die über ein Modem mit einer Verarbeitungseinheit verbunden sind, Mittel zur galvanischen Trennung zwischen den Datenübertragungsmitteln und dem Netz für das Datensignal aufweist, dadurch gekennzeichnet, daß die Ruferfassungsmittel (3) einen Operationsverstärker (40) aufweisen, dessen Ausgang an Mittel (10) zur Erkennung des erfaßten Rufsignals angeschlossen ist und dessen Signaleingang an das erste Drähtepaar (L1 T1, T2) über die Mittel zur galvanischen Trennung und über einen Kondensator (17), der mit der Frequenz des Rufsignals kompatibel ist, sowie einen Widerstand (18) zur Dämpfung des Pegels des Rufsignals angeschlossen ist, die den Mitteln zur galvanischen Trennung für einen Anfangsbetriebsmodus des Endgeräts als Antwortgeber zugeordnet sind, und daß das Gerät weiter erste Mittel (19) zum Überbrücken des Dämpfungswiderstands sowie zweite Mittel zur Impedanzanpassung (16) aufweist, um die Impedanz des Kondensators zu verringern, wobei die Mittel mit dem Kippschalter (2) bei der Erkennung des Rufsignals für den Datenübertragungsbetriebsmodus des Endgeräts angesteuert werden.

2. Bildschirmtext-Endgerät mit Antwortgeber nach Anspruch 1, dadurch gekennzeichnet, daß die Mittel zur Erkennung des erfaßten Rufsignals aus einem Mikroprozessor (10) bestehen, der an den Ausgang des der Erfassung dienenden Operationsverstärkers (40) zusammen mit einem Pegelbegrenzer (46) für das erfaßte Rufsignal angeschlossen ist.

3. Bildschirmtext-Endgerät mit Antwortgeber nach Anspruch 2, dadurch gekennzeichnet, daß der der Erfassung dienenden Operationsverstärker (40) zum Umkippen seines Ausgangszustands eine hohe Schwelle und eine niedrige Schwelle an seinem Bezugsausgang aufweist, die an die Erstellung des erfaßten Signals in Form von Rechteckimpulsen angepaßt sind, deren Frequenz der des Rufsignals gleicht und deren definierte Dauer wenigstens einigen Millisekunden entspricht.

4. Bildschirmtext-Endgerät mit Antwortgeber nach Anspruch 3, dadurch gekennzeichnet, daß der Operationsverstärker an seinem Bezugseingang eine Widerstandsbrücke (41, 42) besitzt, die zwischen eine Spannungsquelle (Vcc) und Masse geschaltet ist, wobei ein Zweig mit Widerstand (43) und Diode (44) diesen Bezugseingang mit dem Ausgang des Verstärkers verbindet und die untere Schwelle und die obere Schwelle definiert.

5. Bildschirmtext-Endgerät mit Antwortgeber nach einem der Ansprüche 1 bis 4, das einen Stromgenerator (16) aufweist, der einen in der Fernsprechleitung fließenden Strom absorbiert, sobald die Fernsprechverbindung erstellt ist, und zwar für die Dauer des Datenübertragungsbetriebsmodus des Endgeräts, dadurch gekennzeichnet, daß die zweiten Impedanzanpassungsmittel (16) aus dem Stromgenerator (16) bestehen, der zur Darstellung einer endlichen, begrenzten Impedanz ausgebildet ist.

6. Bildschirmtext-Endgerät mit Antwortgeber nach Anspruch 5, dadurch gekennzeichnet, daß der Stromgenerator (16) eine Impedanz ist, deren Größe im wesentlichen dem Wert 1800 Ω entspricht.

## Claims

1. Auto-answer videotex terminal connected to the public switched telephone network and having a first pair of wires (L1 T1, T2) adapted to carry ringing signals, a second pair of wires (L1 T1, L2) adapted to carry data signals and a switching unit (2) initially connecting the first pair of wires to the network and connecting the second pair of wires to the network after a telephone connection is set up, said terminal including ringing signal detector means, data signal transmission means connected via a modem to a processor unit, isolating means for data signals between the data transmission means and the network, characterised in that said ringing signal detection means (3) include an operational amplifier (40) the output of which is connected to detected ringing signal recognition means (10) and one signal input of which is connected to said first pair of wires (L1 T1, T2) via said isolating means for the data signal and a capacitor (17) compatible with the ringing signal frequency and a resistor (18) for attenuating said ringing signal associated with said isolating means for an initial call answering operating mode of the terminal, and in that it further comprises first means (19) for bypassing said attenuator resistor and impedance matching second means (16) for reducing the impedance of said capacitor, commanded with said switching unit (2) when said ringing signal is recognised for the data transfer operating mode of the terminal.

2. Auto-answer videotex terminal according to claim 1 characterised in that said detected ringing signal recognition means comprise a microprocessor (10) connected to the output of said operational amplifier (40) and a circuit (46) for limiting the level of the detected ringing signal.

3. Auto-answer videotex terminal according to claim 2 characterised in that said detector operational amplifier (40) reference input has a high threshold and a low threshold for changing its output state adapted to produce the detected signal in the form of pulses at a frequency equal to that of said ringing signal and having a specified duration of at least a few milliseconds.

4. Auto-answer videotex terminal according to claim 3 characterised in that a resistor bridge (41, 42) is connected to a reference input of said operational amplifier and between a voltage supply (Vcc) and earth and a resistor (43) and diode (44) circuit connecting said input to its output defining said low and high thresholds.

5. Auto-answer videotex terminal according to any one of claims 1 to 4 comprising a current generator (16) adapted to absorb a current on the telephone line after the telephone connection has been set up and for the duration of said data transfer operating mode of the terminal, characterised in that said impedance matching second means (16) comprise said current generator (16) which is adapted to have a limited finite impedance.

6. Auto-answer videotex terminal according to claim 5 characterised in that the impedance of said current generator (16) is substantially 1 800 ohms.
